# EUROPEAN PATENT SPECIFICATION

(11) **EP 1 524 788 B1**
(45) Date of publication and mention of the grant of the patent: **09.07.2008**
(21) Application number: 03292561.2
(22) Date of filing: 14.10.2003
(51) Int. Cl.: H04J 3/06

(54) **Enhanced management of pointer processing in case of concatenated payload in SDH and SONET frames**
Verbesserte Verwaltung von Pointerprozessoren bei verketteter Nutzlast in SDH oder SONET Rahmen
Gestion améliorée du traitement de pointeurs en cas de charge utile concaténée dans des trames SDH ou SONET

(43) Date of publication of application: 20.04.2005
(73) Proprietor: Alcatel Lucent, 75008 Paris (FR)
(72) Inventor: Bellato, Alberto, 20044 Bernareggio (Milano) (IT); Razzetti, Luca Gabriele, 20099 Sesto San Giovanni (Milano) (IT); Ruggiero, Antonio, 20099 Sesto San Giovanni (Milano) (IT)
(74) Representative: Colombo, Stefano Paolo

(56) References cited:
- EP-A- 0 999 667
- WO-A-95/13673

## Description

The present invention relates to the field of synchronous digital transmissions and in particular to a method and circuit improving the pointer processing in the event of payload contiguous concatenation in SDH or SONET frames.

As it is known from relevant international standard Recommendations, SDH and SONET frames are transmitted with a pointer. A pointer is an indicator whose value defines the frame offset of a Virtual Container with respect to the frame reference of the transport entity on which it is supported. Sometimes, Virtual Containers are concatenated. A Virtual Container concatenation is a procedure whereby a multiplicity of Virtual Containers is associated one with another with the result that their combined capacity can be used as a single container across which bit sequence integrity is maintained. Conventionally, "VC-n-Xc" means X Contiguously concatenated VC-ns.

A pointer of a concatenated payload is processed in a different manner with respect to a pointer of a non concatenated payload. In particular, ITU-T G.707 provides two different mechanisms, a first one for a concatenated payload and a second one for a non concatenated payload. Thus, in the network elements that are compliant with the ITU-T G.707 Standard, a management mechanism is provided, which mechanism should be set in advance in order to know the type of payload that will be received. In other words, in the standards there are two separate state diagrams for the algorithm that is implemented in order to process pointers: the first one is for pointers carrying normal pointer information (stand alone tributaries or master tributaries in a concatenation bundle), the second one for pointers conveying concatenation indication in a concatenation bundle. When a concatenated payload is expected, the first algorithm must run on the first pointer, and the second algorithm on all the other pointers of the concatenated bundle; then a decision circuitry, which has the knowledge of the expected concatenation level (i.e. the number of pointers which build the bundle), is able to detect any impairment within the bundle, based on the status of all the algorithms running in parallel (which are statically selected).

The problem with Standard solution is that it only allows the static configuration of a received concatenated payload, i.e. it requires to know in advance the concatenation levels being received. There are network scenarios in which an automatic re-arrangement of the hardware is required: e.g., in a ring configuration with transmission of extra traffic on the protecting resource in a 1:n protection scheme, when a switch occurs and the extra traffic is replaced by the working traffic (which usually has an higher priority with respect to the extra traffic), it may happen that working (HP - High Priority) and extra (LP - Low Priority) traffic are differently concatenated: in this case the hardware transition must occur automatically; standard solution doesn't allow for this behaviour.

EP0999667 presents a solution for an automatic detection of the concatenation status, i.e. a method for handling any type of concatenated and not concatenated payloads dynamically, and without having a prior knowledge of the concatenation levels being received. In EP0999667 there is provided a hierarchical structure state machine automatically taking a decision whether an incoming payload is concatenated or not. A top processor machine is provided, the top processor machine collecting all the information from the single state machine. Finally, according to the states detected by the single state machines, the final state of the payload, possibly concatenated, is stated.

The solution according to EP0999667 represents a high step with respect to the prior art solution but the Applicant has recognized that some improvements thereto were still felt and possible.

In fact, the state machine according to EP0999667 stores in its memory only the previous concatenation state and can not perceive the new type of traffic that is passing through a node of a network. In other words, if a traffic changes from a AU-4 16c condition (namely a condition wherein sexteen AU-4s are concatenated one with each other), to a condition wherein the first four AU-4s are in a AU-4 4c (four AU-4s concatenated with each other) and all the others are in a AIS, an alarm condition is revealed. This because a different (with respect to the stored one) concatenation condition is received.

The drawback of the solution according to EP0999667 is that it bases the identification of the concatenation level on a top state machine which acts over the set of pointer interpreter state machines: there are cases in which this top state machine (as it remembers the previous concatenation level) is not correctly managing the payload: e.g., if before the switch the payload was an AU4-16c, and after the switch there is an AU4-4c followed by 12 tributaries in AU-AIS state, the top machine is detecting an AU4-16c LOP alarm, and it prevents the AU4-4c from being properly transported.

In general terms, the technical problem is related to the pointer processing in SDH and SONET frames, in the particular case of contiguous concatenations. The problem is defining a method for the detection of the presence in the received frame of any standardized concatenated or not concatenated payload.

The main object of the present invention is solving the above problems and providing a new pointer processing state machine which is able to self configuring in an automatic manner also in situations as the above ones.

The above and further problems are solved by a method according to claim 1, a pointer processing state machine according to claim 6, and a network element according to claim 11 or 12. The respective dependent claims set forth further advantageous features of the present invention. All the claims are deemed to be an integral part of the present specification.

The basic idea of the present invention is to define a method and a new pointer interpreter state machine that contains both diagrams for concatenated and not concatenated pointers (from ETS 300 417-1-1, figure B.1 and B.2). This state machine acts on every individual pointer; then a pure combinatorial logic (without any memory of the past configurations) is reading all the information from every pointer interpreter state machine and is immediately taking the decision of the concatenation status of the received flow.

The idea is to take the decision about the received concatenation level in two steps. A first block implements a state diagram that contains a merging of the states of the standardised Pointer Interpreter machine for concatenated and not concatenated pointers (from ETS 300 417-1-1, figure B.1 and B.2). This block is applied in parallel to all the tributaries.

A second combinatorial circuit processes the output indications of all the instances of the first machine and can recognize any concatenation combination among the standardized ones, supposing that concatenated payloads are not alarmed; when any alarm occurs on a concatenated payload, the concatenation is broken and tributaries are treated as stand alone.

Accoding to a first aspect, the present invention provides a method for improving management of pointer processing for concatenated and/or not concatenated payload in SDH/SONET frames, the method comprising the steps of: receiving separate indications about the status of single tributaries, the indications comprising Normal State, Concatenated State, Loss of Pointer and Alarm Indication Signal; processing, according to a pure combinatorial logic, the separate indications; and in case one of preset concatenation statuses is identified, such an identified current status of received flow of SDH/SONET frames is promptly declared or, in case no preset concatenation statuses are identified the tributaries are treated as stand alone.

According to a further aspect, the pesent invention provides a pointer processing state machine for improving management of pointer processing for concatenated and/or not concatenated payload in SDH/SONET frames, the machine comprising: a number of single state machines providing corresponding separate indications about the status of single tributaries, the indications comprising Normal State, Concatenated State, Loss of Pointer and Alarm Indication Signal, and a top processor state machine processing, according to a pure combinatorial logic, said separate indications, said top processor state machine, in case one of preset concatenation statuses is identified, declares such an identified current status of received flow of SDH/SONET frames or, in case no preset concatenation statuses are identified, treates the tributaries as stand alone.

The present invention will become fully clear after reading the following detailed description, taken in combination with the attached figures wherein:
- Fig. 1 is a state diagram for the modified pointer processing machine used in the single state machines implementing the first step according to the present invention;
- Fig. 2 represents a two step machine according to the present invention;
- Fig. 3 is a flow chart illustrating an embodiment of the second step according to the present invention; and
- Fig. 4 shows an exemplifying network.

As said above, the present invention is fundamentally based on taking a decision about the received possible concatenation level in two separate steps. A first step wherein single state machines implement state diagrams that contain a merging of the state diagrams of a standardised Pointer Interpreter machine for concatenated and not concatenated pointers (fundamentally from ETS 300 417-1-1, figure B.1 and B.2). These state machines are applied in parallel to all the tributaries.

A second step wherein a top processor combinatorial circuit processes the output indications of all the first state machines and identifies any possible concatenation combination among the standardized ones. When any alarm occurs on a concatenated payload, the concatenation is broken and tributaries are treated as stand alone.

Thus, according to the present invention, any single pointer processing state machine (SM1, SM2, ...SMn) is provided for each tributary in a network element. Each single pointer is received, processed and classified according to one of the following four categories:
1. normal pointer ("NORM", or simply "N"), namely valid pointer;
2. pointer bearing a concatenation indication ("CONC", or simply "C"), namely indicating that the tributary in question (for instance the AU-4) can be considered as concatenated;
3. pointer indicating a first alarm condition (AU-AIS, or simply "AIS" or "A"), namely "all ones";
4. pointer indicating a second alarm condition (LOP, or simply "L"), namely "Loss Of Pointer" or invalid pointer.

The information collected by all the state machines operating in parallel and having analyzed the other tributaries, provide the condition of the global signal (normal or concatenated).

Typically, only the Standardized concatenation type configurations will be recognized, namely 4c, 16c and 64c.

According to the present invention, a top state processor TP is provided for processing the information received by the single state machines, the top processor does not keep memory of a previous state. In other words, the top state machine TP does not need to, and indeed can not, be set in advance in a non concatenated state or in a particular concatenation state.

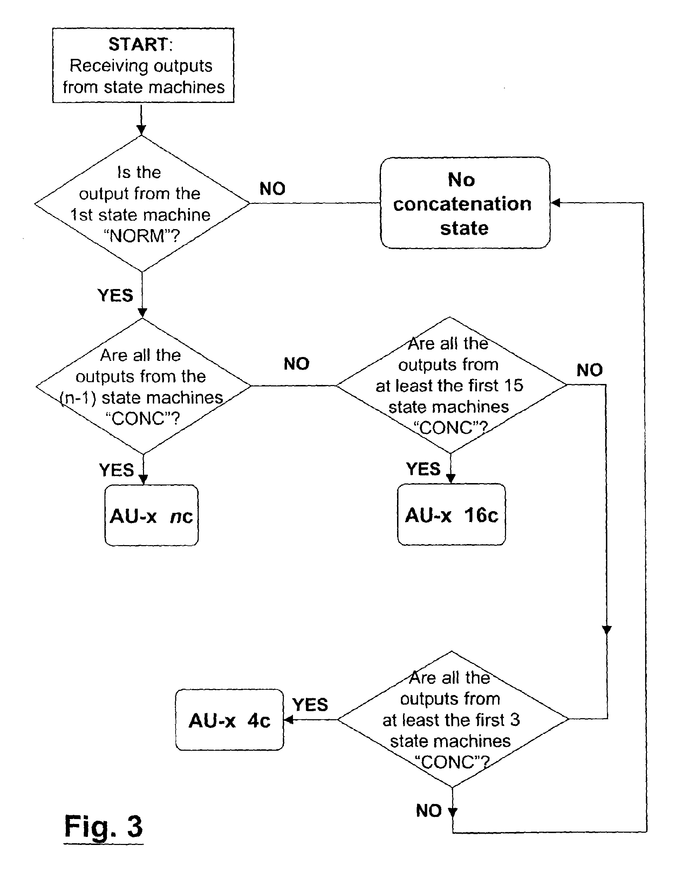

With reference to Fig. 3, the top processor state machine TP receives indications from the single state machines, processes such indications by a simple combinatorial logic and possibly derives one of standardized concatenation states (AU-x_4c, AU-x_16c or AU-x_64c). Indeed, Fig. 3 shows a particular embodiment and does not represent a whole state machine. In fact, by way of example only, the first tributary (followed by n-1 tributaries) is taken into consideration for deciding about the possible concatenation state. Indeed, the concatenation master processor could be in any position, either a multiple of 4 or not.

Thus, with reference to the flow chart embodiment of Fig. 3, only in case the indication from the first tributary is "NORM" (namely a normal, non allarmed, flow) the top processor processes the indications from the further tributaries for a possible concatenation state. In the negative, the single tributaries are considered as they stand.

It should be remarked, once again, that Fig. 3 and the following description relate only to the case wherein the master tributary is the first processed AU-4. This is only for clarity reasons and does not intend to limit the scope of protection in any way.

If all the indications from the other (*n*-*1*) tributaries are "CONC", the top processor state machine recognizes an "AU-x_*nc*" concatenation state, with n being 4, 16 or 64.

In the negative, if not all the indications from the other (*n*-*1*) tributaries are "CONC", possibly one or more tributaries are allarmed. But, if at least fifteen or three of them are in "CONC" state, the output from the top processor state machine will be "AU-x_4c" or "AU-x_16c", respectively.

It could also happen that, among the tributaries not belonging to AU-x_4c, there is one or more tributaries having a "NORM" pointer. In this case, such "NORM" pointer tributary/ies would become either master/s of possible concatenated flows or independent AU-x's.

Once again, it should be remarked that the result from the top processor state machine is based only on the presently received indications from the tributaries and not on previously stored concatenation status.

The invention will become even more clear with reference to the following examples.

In a first example, four state machines (SM1 to SM4) in parallel are provided (it should be noticed that the number of state machines will be as the throughput of the connected network element port). The first state machine SM1 reports "N", the second state machine SM2 reports "C", as well as the third and fourth state machines do. In this case, the top processor state machine receives "N" AND "C" AND "C" AND "C", and will report an "AU-4 4c" concatenation status. In case a payload (for instance the fourth) becomes allarmed, the sequence received is the following "N" AND "C" AND "C" AND "L" (or AU-AIS). According to the present invention, the top state machine operates a combinatorial process of the received information, does not recognize the previous concatenation state anymore and considers the four flows as separated flows, namely like they would belong to a non concatenated flow. Specifically, the first tributary is considered valid; for the forth (being allarmed), the LOP or AU-AIS is rewritten; the second and third tributaries are not recognized as belonging to a concatenated flow and are considered as LOP.

If the above situation (change from "N-C-C-C" to "N-C-C-L") would be managed through a state machine mechanism/method according to EP0999667, all the tributaries would be considered in the alarm state, also the first one and nothing could be saved.

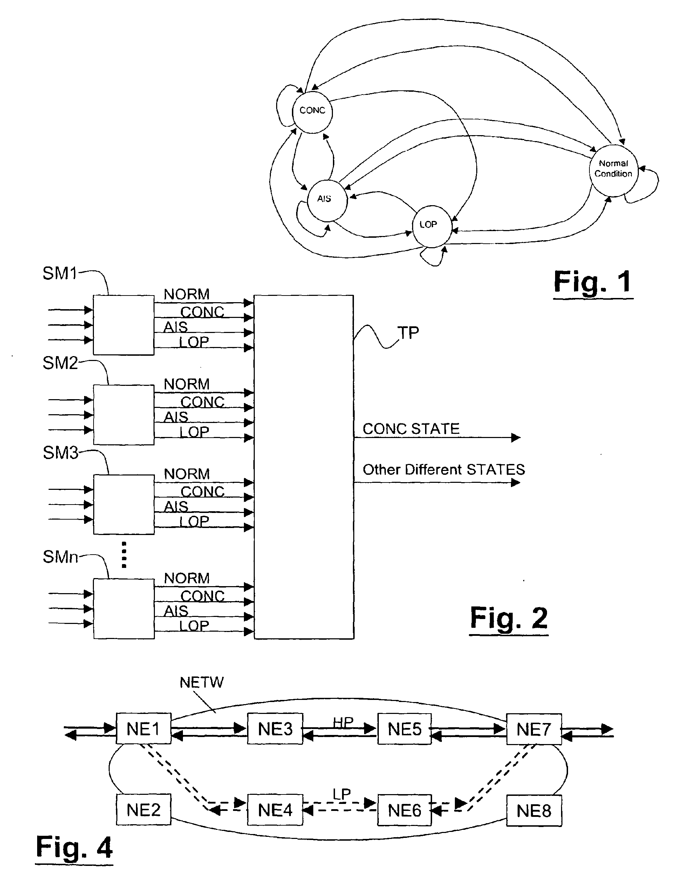

For a second example, reference should be made to Figure 4 diagrammatically showing a network with 8 network elements bearing numbers 1 to 8, respectively. For clarity reasons, the links between the network elements have not been shown, with the exception of very few that are needed for illustrating the features of the present invention. A high priority (HP) traffic path from NE1 to NE7 (passing through NE3 and NE5) is established. Let's suppose that the HP traffic is an AU-4_4c flow (four concatenated AU-4s). The HP traffic is protected through the protecting resources identified among NE1 - NE4 - NE6 - NE7. When the protection mechanism is not activated, the protecting resources are used for LP traffic transmission. Differently from the HP traffic, the LP traffic is AU-4_16c configured. The end nodes NE1 and NE7 are manually configured for managing such a traffic.

In case of a failure in the working resource, the traffic becomes transported by the protecting resources whose nodes, as said above, are configured for managing an AU-4_16c. Thus, a node (for instance NE4) does not receive anymore the following sequence
"N-C-C-C-C-C-C-C-C-C-C-C-C-C-C-C"
but it will receive the following
sequenceN-C-C-C-A-A-A-A-A-A-A-A-A-A-A-A"

A state machine according to EP0999667, which has been set for receiving an AU-4 16c, will detect a failure and will not be able to save the traffic.

On the contrary, a top processor TP according to the present invention does not store information about the previous state and does not need to be configured in advance. It simply operates according a combinatorial logic. With further reference to the above example, it would consider the tributaries as
**NORM** AND **CONC** AND **CONC** AND **CONC** AND **AIS** AND **AIS** AND **AIS** AND **AIS** AND **AIS** AND **AIS** AND **AIS** AND **AIS** AND **AIS** AND **AIS** AND **AIS** AND **AIS**

The machine would compare the received concatenation combination with the standard ones (4c, 16c or 64c) and self configure accordingly. In the above case, it will self configure according to an AU-4_4c. The other traffic flows are squelched by insering AIS.

The present invention obtains a number of advantages with respect to the known solutions. First, there is provided the possibility to have an automatic detection of the concatenation status within the received data stream (there is no need to know in advance the concatenation level that is required).

Second, the automatic re-arrangement of the concatenation has not memory of previous concatenated configurations, so it is not possible to have misbehaviours due to spurious states in the state machines, which can be forced by traffic re-arrangement.

There have thus been shown and described a novel method and a novel state machine which fulfill all the objects and advantages sought therefor. Many changes, modifications, variations and other uses and applications of the subject invention will, however, become apparent to those skilled in the art after considering the specification and the accompanying drawings which disclose preferred embodiments thereof. All such changes, modifications, variations and other uses and applications which do not depart from the scope of the invention are deemed to be covered by the invention which is limited only by the claims which follow.

## Claims

1. Method for improving management of pointer processing for concatenated and/or not concatenated payload in SDH/SONET frames, the method comprising the steps of:
- receiving separate indications about the status of single tributaries, the indications comprising Normal State (NORM), Concatenated State (CONC), Loss of Pointer (LOP) and Alarm Indication Signal (AlS),
- processing the separate indications; and
- in case one of preset concatenation statuses is identified, such an identified current status of received flow of SDH/SONET frames is promptly declared or, in case no preset concatenation statuses are identified the tributaries are treated as stand alone, **characterized in that** said processing comprises processing according to a pure conbinatorial logic without keeping track of past configurations.

2. Method according to claim 1, wherein the preset concatenation statuses are AU-x_4c, AU-x _16c or AU-x_64c.

3. Method according to claim 1 or 2, wherein the preset concatenation state AU-x_4c is declared when an indication from a tributary is Normal State (NORM) and at least three indications from corresponding following tributaries are Concatenated State (CONC) even though a number of following or previous indications from tributaries are Loss of Pointer (LOP) or Alarm Indication Signal (AIS).

4. Method according to claim 1 or 2, wherein the preset concatenation state AU-x_16c is declared when an indication from a tributary is Normal State (NORM) and at least 15 indications from corresponding following tributaries are Concatenated State (CONC) even though a number of following or previous indications from tributaries are Loss of Pointer (LOP) or Alarm Indication Signal (AIS).

5. Method according to any of previous claims, wherein the step of declaring a concatenation state is performed independently from a previously stored concatenation level.

6. Pointer processing state machine for improving management of pointer processing for concatenated and/or not concatenated payload in SDH/SONET frames, the machine comprising:
- a number of single state machines (SM1, SM2, SMn) providing corresponding separate indications about the status of single tributaries, the indications comprising Normal State (NORM), Concatenated State (CONC), Loss of Pointer (LOP) and Alarm Indication Signal (AIS), and
- a top processor state machine (TP) processing said separate indications, said top processor state machine, in case one of preset concatenation statuses is identified, declares such an identified current status of received flow of SDH/SONET frames or, in case no preset concatenation statuses are identified, treates the tributaries as stand alone, **characterized in that** said top processor state machine (TP) processes said separate indications according to a pure combinatorial logic without keeping track of past configurations.

7. State machine according to claim 6, wherein the top processor state machine declares a concatenation state independently from a previously stored concatenation level.

8. State machine according to claim 6 or 7, wherein the preset concatenation statuses are AU-x_4c. AU-x_16c or AU-x,_64c.

9. State machine according to any of claims 6-8, wherein the preset concatenation state AU-x_4c is declared when an indication from a tributary is Normal State (NORM) and at least three indications from corresponding following tributaries are Concatenated State (CONC) even though a number of following or previous indications from tributaries are Loss of Pointer (LOP) or Alarm Indication Signal (AIS).

10. State machine according to any of claims 6-8, wherein the preset concatenation state AU-x_6c is declared when an indication from a first tributary is Normal State (NORM) and at least 15 indications from corresponding following tributaries are Concatenated State (CONC) even though a number of following or previous indications from tributaries are Loss of Pointer (LOP) or Alarm Indication Signal (AIS).

11. Network element for a SDH or SONET network comprising a pointer processing state machine according to any of claims 6-10.

12. Network element for a SDH or SONET network performing the steps of any of claims 1 to 5.

## Patentansprüche

1. Verfahren zur Verbesserung der Verwaltung der Pointerverarbeitung für verkettete und/oder nicht verkettete Nutzlast in SDH/SONET-Rahmen, wobei das Verfahren folgende Schritte umfasst:
- Empfangen von separaten Angaben über den Status von einzelnen Tributary-Einheiten, wobei die Angaben Normalstatus (NORM), Verkettungsstatus (CONC), Pointerverlust (LOP) und Alarmanzeigesignal (AIS) umfassen,
- Verarbeiten der separaten Angaben; und
- Wenn einer der voreingestellten Verkettungsstatus identifiziert wird, wird ein solcher identifizierter aktueller Status eines empfangenen Stroms von SDHSONET-Rahmen prompt gemeldet oder, wenn keine voreingestellten Verkettungsstatus identifiziert werden, werden die Tributary-Einheiten als Standalones behandelt, **dadurch gekennzeichnet, dass** die besagte Verarbeitung eine Verarbeitung entsprechend einer rein kombinatorischen Logik ohne Nachvollziehung von vorherigen Konfigurationen umfasst.

2. Verfahren nach Anspruch 1, wobei die voreingestellten Verkettungsstatus AU-x_4c, AU-x_16c oder AU-x_64c sind.

3. Verfahren nach Anspruch 1 oder 2, wobei der voreingestellte Verkettungsstatus AU-x_4e gemeldet wird, wenn eine Angabe von einer Tributary-Einheit Normalstatus (NORM) ist und mindestens drei Angaben von entsprechenden nachfolgenden Tributary-Einheiten Verkettungsstatus (CONC) sind, obwohl eine Anzahl von nachfolgenden oder vorhergehenden Angaben von Tributary-Einheiten Pointerverlust (LOP) oder Alarmanzeigesignal (AIS) sind.

4. Verfahren nach Anspruch 1 oder 2, wobei der voreingestellte Status AU-x_6c gemeldet wird, wenn eine Angabe von einer Tributary-Einheit Normalstatus (NORM) ist und mindestens 15 Angaben von entsprechenden nachfolgenden Tributary-Einheiten Verkettungsstatus (CONC) sind, obwohl eine Anzahl von nachfolgenden oder vorhergehenden Angaben von Tributary-Einheiten Pointerverlust (LOP) oder Alarmanzeigesignal (AIS) sind.

5. Verfahren nach einem beliebigen der vorstehenden Ansprüche, wobei der Schritt des Meldens eines Verkettungsstatus unabhängig von einer zuvor gespeicherten verketteten Ebene ausgeführt wird.

6. Pointerverarbeitungs-Zustandsautomat zur Verbesserung der Verwaltung der Pointerverarbeitung für verkettete und/oder nicht verkettete Nutzlast in SDH/SONET-Rahmen, wobei der Automat umfasst:
- Eine Anzahl von einzelnen Zustandsautomats (SM1, SM2, SMn), welche die entsprechenden Angaben über den Status von einzelnen Tributary-Einheiten liefern, wobei die Angaben Normalstatus (NORM), Verkettungsstatus (CONC), Pointerverlust (LOP) und Alarmanzeigesignal (AIS) umfassen, und
- Top-Prozessor-Zustandsautomat (TP), welcher die besagten separaten Angaben verarbeitet, wobei der besagte Top-Processor-Zustandsautomat, wenn einer der voreingestellten Verkettungsstatus identifiziert wird, einen solchen identifizierten aktuellen Status eines empfangenen Stroms von SDH/SONET-Rahmen meldet oder, wenn keine voreingestellten Verkettungsstatus identifiziert werden, die Tributary-Einheiten als Standalones behandelt, **dadurch gekennzeichnet, dass** der besagte Top-Prozessor-Zustandsautomat (TP) die besagten separaten Angaben entsprechend einer rein kombinatorischen Logik ohne Nachvollziehung von vorherigen Konfigurationen verarbeitet.

7. Zustandsautomat nach Anspruch 6, wobei der Top-Prozessor-Zustandsautomat einen verketteten Status unabhängig von einer zuvor gespeicherten verketteten Ebene meldet.

8. Zustandsautomat nach Anspruch 6 oder 7, wobei die voreingestellten Verkettungsstatus AU-x_4c, AU-x_16c oder AU-x_64c sind.

9. Zustandsautomat nach einem beliebigen der Ansprüche 6-8, wobei der voreingestellte Verkettungsstatus AU-x_4c gemeldet wird, wenn eine Angabe von einer Tributary-Einheit Normalstatus (NORM) ist und mindestens drei Angaben von entsprechenden nachfolgenden Tributary-Einheiten Verkettungsstatus (CONC) sind, obwohl eine Anzahl von nachfolgenden oder vorhergehenden Angaben von Tributary-Einheiten Pointerverlust (LOP) oder Alarmanzeigesignal (AIS) sind.

10. Zustandsautomat nach einem beliebigen der Ansprüche 6-8, wobei der voreingestellte Status AU-x_16c gemeldet wird, wenn eine Angabe von einer ersten Tributary-Einheit Normalstatus (NORM) ist und mindestens 15 Angaben von entsprechenden nachfolgendenTributary-Einheiten Verkettungsstatus (CONC) sind, obwohl eine Anzahl von nachfolgenden oder vorhergehenden Angaben von Tributary-Einheiten Pointerverlust (LOP) oder Alarmanzeigesignal (AIS) sind.

11. Netzelement für ein SDH- oder SONET-Netzwerk, welches einen Pointerverarbeitungs-Zustandsautomat nach einem beliebigen der Ansprüche 6-10 umfasst.

12. Netzelement für ein SDH- oder SONET-Netzwerk, welches die Schritte nach einem beliebigen der Ansprüche 1 bis 5 ausführt.

## Revendications

1. Procédé d'amélioration de la gestion du traitement du pointeur pour des données utiles concaténées et/ou non concaténées dans des trames SDH/SONET, le procédé comprenant les étapes suivantes :
réception d'indications séparées sur l'état de subordonnés uniques, les indications comprenant Etat normal (NORM), Etat concaténé (CONC), Perte du pointeur (LOP) et Signal d'alarme (AIS),
traitement des indications séparées ; et
dans le cas où l'un des états de concaténation préétablis est identifié, un tel état courant identifié de flux de trames SDH/SONET reçues est rapidement déclaré ou, dans le cas où aucun état de concaténation préétabli n'est identifié, les subordonnés sont traités comme étant autonomes,
**caractérisé en ce que** ledit traitement comprend un traitement selon une logique combinatoire pure sans garder trace des configurations passées.

2. Procédé selon la revendication 1, dans lequel les états de concaténation préétablis sont AU-x_4c, AU-x_16c ou AU-x_64c.

3. Procédé selon la revendication 1 ou 2, dans lequel l'état de concaténation préétabli AU-x_4c est déclaré lorsqu'une indication provenant d'un subordonné est Etat normal (NORM) et au moins trois indications provenant de subordonnés suivants correspondants sont Etat concaténé (CONC) même si un certain nombre d'indications suivantes ou précédentes provenant de subordonnés sont Perte de pointeur (LOP) ou Signal d'alarme (AIS).

4. Procédé selon la revendication 1 ou 2, dans lequel l'état de concaténation préétabli AU-x 16c est déclaré lorsqu'une indication provenant d'un subordonné est Etat normal (NORM) et au moins quinze indications provenant de subordonnés suivants correspondants sont Etat concaténé (CONC) même si un certain nombre d'indications suivantes ou précédentes provenant de subordonnés sont Perte de pointeur (LOP) ou Signal d'alarme (AIS).

5. Procédé selon l'une quelconque des revendications précédentes, dans lequel l'étape de déclaration d'un état de concaténation est exécutée indépendamment d'un niveau de concaténation stocké précédemment.

6. Machine d'état de traitement de pointeur destinée à améliorer la gestion du traitement du pointeur pour des données utiles concaténées et/ou non concaténées dans des trames SDH/SONET, la machine comprenant :
un certain nombre de machines d'état uniques (SM1, SM2, SMn) produisant des indications séparées correspondantes sur l'état de subordonnés uniques, les indications comprenant Etat normal (NORM), Etat concaténé (CONC), Perte du pointeur (LOP) et Signal d'alarme (AIS), et
une machine d'état de traitement (TP) qui traite lesdites indications séparées, ladite machine d'état de traitement, dans le cas où l'un des états de concaténation préétablis est identifié, déclarant cet état courant identifié de flux de trames SDH/SONET reçues ou, dans le cas où aucun état de concaténation préétabli n'est identifié, traitant les subordonnés comme étant autonomes,
**caractérisée en ce que** ladite machine d'état de traitement (TP) traite lesdites indications séparées selon une logique combinatoire pure sans garder trace des configurations passées.

7. Machine d'état selon la revendication 6, dans laquelle la machine d'état de traitement déclare un état de concaténation indépendamment d'un niveau de concaténation stocké précédemment.

8. Machine d'état selon la revendication 6 ou 7, dans laquelle les états de concaténation préétablis sont AU-x_4c, AU-x_16c ou AU-x_64c.

9. Machine d'état selon l'une quelconque des revendications 6 à 8, dans laquelle l'état de concaténation préétabli AU-x_4c est déclaré lorsqu'une indication provenant d'un subordonné est Etat normal (NORM) et au moins trois indications provenant de subordonnés suivants correspondants sont Etat concaténé (CONC) même si un certain nombre d'indications suivantes ou précédentes provenant de subordonnés sont Perte de pointeur (LOP) ou Signal d'alarme (AIS).

10. Machine d'état selon l'une quelconque des revendications 6 à 8, dans laquelle l'état de concaténation préétabli AU-x_16c est déclaré lorsqu'une indication provenant d'un subordonné est Etat normal (NORM) et au moins quinze indications provenant de subordonnés suivants correspondants sont Etat concaténé (CONC) même si un certain nombre d'indications suivantes ou précédentes provenant de subordonnés sont Perte de pointeur (LOP) ou Signal d'alarme (AIS).

11. Elément de réseau pour un réseau SDH ou SONET comprenant une machine d'état de traitement de pointeur selon l'une quelconque des revendications 6 à 10.

12. Elément de réseau pour un réseau SDH ou SONET exécutant les étapes de l'une quelconque des revendications 1 à 5.
